# EUROPEAN PATENT APPLICATION

(11) **EP 4 461 400 A1**
(43) Date of publication of application: **13.11.2024**
(21) Application number: 23172307.3
(22) Date of filing: 09.05.2023
(51) Int. Cl.: B01D 63/08, B01D 53/22

(54) **MEMBRANE MODULE**

(71) Applicant: Helmholtz-Zentrum hereon GmbH, 21502 Geesthacht (DE); Cool Planet Technologies Ltd, London EC1V 2NX (GB)
(72) Inventor: Notzke, Heiko, 21502 Geesthacht (DE); Wolff, Thorsten, 21502 Geesthacht (DE); Brinkmann, Torsten, 21502 Geesthacht (DE); Corner, Andrew, Guildford, GU1 2 AB (GB); Gorringe, Simon, London, SW15 1AE (GB)
(74) Representative: Uexküll & Stolberg

(57) **Abstract**

A membrane module for separating a fluid feed stream (14) which comprises permeate material and retentate material into a permeate stream (18, 18a, 18b, 18c, 18d) and a retentate stream (16, 16a) comprises at least one pressure vessel (2) extending along a longitudinal axis (4) from a first end (5) towards a second end (6) and having a cylindrical wall (7) enclosing an internal space (8). The first end (5) of the pressure vessel (2) is closed by a first end cap (11) and the second end (6) of the pressure vessel (2) is closed by a second end cap (12). At least one of the first end cap (11) and the cylindrical sidewall (7) comprises a fluid inlet (13) for receiving the fluid feed stream (14). The second end cap (12) comprises a retentate outlet (15) for discharging the retentate stream (16, 16a). At least one of the first end cap (11) and the second end cap (12) comprises one or more permeate outlets (17, 17a, 17b, 17c) for discharging the permeate stream (18, 18a, 18b, 18c, 18d).

The membrane module further comprises at least one membrane cartridge (9, 9a) arranged inside the pressure vessel (2) each of said membrane cartridges comprising multiple membrane envelopes arranged in the form of a stack. The membrane envelopes each comprise two membranes each arranged on a carrier material and one or more first spacers between the membranes, which keep the membranes spaced apart from each other, in order to allow a free flow cross-section for a through-flow of the permeate stream (18, 18a, 18b, 18c, 18d) through the membrane envelopes. The membranes comprise edges along which the membranes of a membrane envelope are connected to each other, in order to prevent the fluid feed stream (14) and the retentate stream (16, 16a) from penetrating into the membrane envelopes. Each of the membrane cartridges (9, 9a) further comprise second spacers between the membrane envelopes, which keep the membrane envelopes spaced apart, in order to allow a free flow cross-section for a throughflow of the fluid feed stream (14) and/or the retentate stream (16, 16) in a flow direction. The membrane cartridges (9, 9a) further comprise one or more permeate tubes (19), which extend, transversely to the flow direction of the fluid feed stream (14) and are in fluid connection with the at least one permeate outlet (17, 17a, 17b, 17c. The one or more permeate tubes (19) comprise one or more radial openings, through which the permeate material from the membrane envelopes arrives in the one or more permeate tubes (19).

## Description

The present invention relates to a membrane module for separating a fluid feed stream into a permeate stream and a retentate stream, in particular to a membrane module which can be operated at a high pressure.

### BACKGROUND OF THE INVENTION

Membrane-based separation processes have found numerous applications in various industries over the past decades. They find their application in fields such as water, energy, chemical, petro-chemical and pharmaceutical industries. Their increasing degree of application is due to the ability to produce high permeability and essentially defect-free membranes on a large scale, and the ability to assemble these membranes into compact, efficient and economical membrane modules with a high membrane surface-area.

Industrial membrane separation requires large areas of membrane surface to be economically and effectively packaged. These packages are referred-to as membrane modules. Generally, there are four basic types of membrane module: plate-and-frame, spiral wound, tubular and hollow fibre membrane modules. Effective module design is one of the critical qualities which determine the commercial success of membrane-based separation units.

Membrane modules separate a fluid feed stream into a permeate stream and a retentate stream. The stream which penetrates the membrane and is separated from the feed material is referred-to as permeate stream, and the stream stripped of the permeate, which does not penetrate the membrane and is dispensed from the separation unit, is referred-to as retentate stream. Some industrial applications benefit - in addition to a large surface area - from the application of high pressure. Such processes include, for example, the separation of carbon dioxide from flue gases of industrial and power generation CO₂ emitters. Using renewable energy, the carbon dioxide separated off as permeate can be converted into usable, carbon-based products such as fuels or polymers, or can be stored underground or used as nutrient for algae.

The use of membrane technology for the large-scale capture of carbon dioxide from major industrial flue gas emissions requires extremely large membrane areas. In addition to the large membrane area the membranes and the space required to house such large membrane areas, it would be desirable to operate membrane separation also at high pressures, such as at an absolute pressure above 120 kPa.

EP 3 227 004 A1 for example is directed to a membrane module whose components are housed in a 20', 40', 45' HC, 45' PW or 53' HC container. The membrane module provides a large membrane area, by means of which the number of individual membrane modules required in practical applications can be reduced. However, the membrane module does not allow operation at an elevated pressure above approximately 120 kPa as the container housing is not able to withstand such operating pressures.

Membranes can also be arranged in the form of flat sheet membranes which are spirally wound and contained within tubular housings, typically containing 40-80 m² of membrane area. The tubular housings are able to withstand an absolute operating pressure in excess of 1 MPa. However, this approach is prohibitively expensive due to the large number (thousands) of tubular housings that would be required for the large-scale capture of carbon dioxide. These are both expensive to manufacture and difficult to interconnect.

Another option for arranging gas phase separation membranes in membrane modules is the use of hollow fibre membranes. Hollow fibre membranes utilize thousands of long, porous filaments ranging from 0.1 - 3.5 mm wide, that are potted in place in a shell. Each filament is very narrow in diameter and flexible. Hollow fibres can find uses in various types of membrane processes, ranging from microfiltration to reverse osmosis and gas separation. However, the geometry of hollow fibre membranes is not suitable for the type of membrane used in this invention for carbon dioxide separation from flue gases, as it would cause a large pressure drop throughout the length of the membrane and thin polymer film required for carbon dioxide separation cannot be applied.

### DESCRIPTION OF THE INVENTION

It is therefore the object of the present invention to provide and operate a membrane module which has large membrane areas and is able to operate at an absolute pressure above 120 kPa.

The above object is achieved by a membrane module according to claim 1. Preferred embodiments are set out in the dependent claims.

According to the present invention, the membrane module is adapted for separating a fluid feed stream which comprises permeate material and retentate material into a permeate stream and a retentate stream. The membrane module comprises at least one pressure vessel extending along a longitudinal axis from a first end towards a second end and having a cylindrical wall enclosing an internal space. The first end of the pressure vessel is closed by a first end cap and the second end of the pressure vessel is closed by a second end cap. At least one of the first end cap and the cylindrical sidewall comprises a fluid inlet for receiving the fluid feed stream. The second end cap comprises a retentate outlet for discharging the retentate stream. At least one of the first end cap and the second end cap comprises one or more permeate outlets for discharging the permeate stream.

The membrane module further comprises at least one membrane cartridge arranged inside the pressure vessel each of said membrane cartridges comprising multiple membrane envelopes arranged in the form of a stack. Each membrane envelope comprises two membranes arranged on a carrier material and one or more first spacers between the membranes, which keep the membranes spaced apart from each other, in order to allow a free flow cross-section for a through-flow of the permeate stream through the membrane envelopes. The membranes comprise edges along which the membranes of a membrane envelope are connected to each other, in order to prevent the fluid feed stream and the retentate stream from penetrating into the membrane envelopes.

Each of the membrane cartridges further comprises second spacers between the membrane envelopes, which keep the membrane envelopes spaced apart, in order to allow a free flow cross-section for a throughflow of the fluid feed stream and/or the retentate stream in a flow direction. Each membrane cartridge further comprises one or more permeate tubes, which extend transversely to the flow direction of the fluid feed stream and are in fluid connection with the at least one permeate outlet. The one or more permeate tubes comprise one or more radial openings, through which the permeate material from the membrane envelopes arrives in the one or more permeate tubes.

The invention enables a large area of membrane to be packaged into a compact low-cost housing and allows the membrane module to be operated at an elevated pressure above 120 kPa. This enhances the performance of the membrane and allows a cost effective and economically viable use. Furthermore, the invention allows for a realisation of countercurrent flow patterns with respect to feed and permeate streams of each of the stacked membrane envelopes and hence an improved use of the available separation driving force.

Preferably, the permeate tubes are perforated or contain slits and through holes are punched into the membrane envelopes and the spacers. Leakage of gas from the high pressure fluid feed stream is prevented by placing sealing rings around the permeate tubes between the individual membrane envelopes and the first and the last envelope of the stack and the adjacent housing material. The sealing is ensured by e.g. using threaded ends of the tubes and sealed screw caps. The permeate tubes of the individual stacks may be connected to an internal manifold system of the membrane module connecting the permeate tubes with the one or more permeate outlets of the pressure vessel.

In connection with the present invention the term pressure has to be understood as referring to the absolute pressure.

In an embodiment of the present invention the membrane module is configured to be operated at an absolute pressure range of the fluid feed stream from 100 kPa to 2 MPa, preferably from 100 kPa to 1.5 MPa, more preferably from 150 kPa to 1.0 MPa. The higher the pressure the lower the gas volume of the permeate stream exiting the membrane module. Due to a higher operating pressure the size of the supporting equipment, e.g. the number of required vacuum pumps on the permeate side of the membrane module, can be reduced.

In another embodiment of the present invention the at least one membrane cartridge has a cuboid housing. The cuboid shape allows the stacking of the preferably rectangular membrane envelopes in the housing. Preferably, the housing is constructed from thin stainless-steel plates. Optionally, other metals or plastic materials such as glass-reinforced plastic (GRP) may be used.

In an embodiment of the present invention each pressure vessel comprises an annulus located radially inward between the cylindrical wall of the pressure vessel and the cuboid housing of the at least one membrane cartridge, wherein the pressure vessel further comprises a first end piece and a second end piece, each sealing the at least one membrane cartridge against the first end cap and the second end cap, respectively, and, wherein the first end piece comprises an equalization port which is configured to provide a fluid connection between the fluid inlet at the first end cap and the annulus such that the pressure at the fluid inlet and the annulus is equalized. In case the membrane module comprises multiple membrane cartridges which are arranged inside the pressure vessel in series, the equalisation port may generally be arranged between any of the membrane cartridges. However, it is preferred that the first end piece comprises the equalization port. As the pressure at the fluid inlet is equalized with the pressure in the annulus of the pressure vessel the membrane cartridges themselves are not pressure retaining. The maximum pressure differential between the annulus and the internal pressure within the at least one membrane cartridge equals the sum of the differential pressure across each of the membrane cartridges inside the pressure vessel through which the fluid feed stream is guided. If, for example, four membrane cartridges are arranged in series inside the pressure vessel, such that the fluid feed stream is guided through the four membrane cartridges one after the other, the maximum pressure differential is about 2 kPa to 20 kPa. Once the pressure between the annulus and the fluid inlet is equalized there is no flow through the annulus of the pressure vessel.

In another embodiment of the present invention the membrane module comprises multiple membrane cartridges which are arranged in series inside the pressure vessel along the longitudinal axis and, wherein the cuboid housings of the membrane cartridges are sealed to each other, such that the fluid feed stream flows through the multiple membrane cartridges before exiting the membrane module as retentate stream. Each of the membrane cartridges comprises one or more permeate tubes in which the permeate material from the membrane envelopes arrives and streams towards the permeate outlet. The arrangement of multiple membrane cartridges in series allows the withdrawal of multiple permeate streams, namely at least one permeate stream per membrane cartridge, individually by means of internal pipe work. This allows the combination of two permeate streams, e.g. from two subsequent membrane cartridges, and hence the possibility to realise a two stage stripping cascade process using only one pressure vessel. Permeate streams each having a different carbon dioxide concentration may be mixed in order to produce a permeate stream with a specified carbon dioxide concentration.

In an embodiment of the present invention up to 12 membrane cartridges, preferably up to 10 membrane cartridges, more preferably up to 8 membrane cartridges, e.g. 4 membranes cartridges are arranged in series inside the pressure vessel. The number of membrane cartridges arranged inside a pressure vessel and thus the size of the pressure vessel may be chosen depending on the size of the available assembly space. If, for example, the membrane module is to be housed inside a 40' PW or HC container, up to eight membrane cartridges are installed inside one pressure vessel such that the pressure vessel extends over the entire length of the container. The membrane cartridges arranged in series preferably have the same geometrical shape.

The length of the membrane envelopes and thus the length of each of the membrane cartridges comprising the stacked membrane envelopes can be adjusted according to the process requirements. It is to be observed that while the pressure drop between feed and permeate can be adjusted by selecting the applied feed and permeate pressures, there is also a slight pressure drop resulting from the feed stream flowing in parallel along the membrane surface. This pressure drop of course increases with the length of the membrane envelope.

In another embodiment of the present invention the pressure vessel comprises a detachment mechanism which upon actuation allows detachment of the at least one membrane cartridge out of the pressure vessel. In case one or multiple of the membrane cartridges are damaged and need replacement, the detachment mechanism allows the detachment of one or more membrane cartridges out of the pressure vessel.

In an embodiment of the present invention the detachment mechanism comprises rails arranged inside the pressure vessel parallel to the longitudinal axis thereof and the at least one membrane cartridge comprises pulleys configured to roll on the rails such that the at least one membrane cartridge is movable along the rails out of the pressure vessel. Preferably, the detachment mechanism further comprises detachment means which upon actuation allow a detachment of the first and/or second end cap from the pressure vessel in order to access the membrane cartridges. The pulleys and the rails may be configured to allow movement of the one or more membrane cartridges towards the first and second end of the pressure vessel, respectively. The movement of the membrane cartridges may be accomplished by an operator manually by hand. A crane may optionally be used to lift the one or more cartridges one by one out of the pressure vessel.

In another embodiment of the present invention the membrane cartridges are arranged in two cartridge rows each cartridge row comprising multiple membrane cartridges arranged in series, wherein the two cartridge rows are arranged in parallel such that the fluid feed stream simultaneously flows through both of the cartridge rows. It is in general desirable that the pressure drop over multiple membrane cartridges arranged in series is minimized. Arranging two cartridge rows in parallel which together comprise the same number of membrane cartridges than one single row of membrane cartridges arranged in series reduces the pressure drop over each of the two cartridge rows. The pressure drop may thus be chosen individually depending on the used membranes, the fluid feed stream pressure and the available assembly space.

In an embodiment of the present invention the two cartridge rows are arranged along the longitudinal axis with a gap in between the two cartridge rows, wherein the fluid inlet at the first end cap or the cylindrical sidewall of the pressure vessel is fluidically connected with the gap between the two cartridge rows and, wherein the two cartridge rows are further arranged such that the fluid feed stream is divided at the gap and flows in opposite directions along the longitudinal axis through both of the cartridge rows towards the first end cap and the second end cap, respectively. Preferably, the membrane module comprises a feed stream conduit connecting the fluid inlet at the first end cap with the gap between the two cartridge rows.

In another embodiment of the present invention the membrane module comprises multiple pressure vessels, preferably up to 10 pressure vessels, more preferably up to 6 pressure vessels, most preferably 4 pressure vessels and further comprises a 20', 40', 45' HC, 45' PW or 53' HC container in which the pressure vessels are housed. Thus, the membrane module can be transported and handled in a very simple and cost-effective manner despite its comparatively large volume and its high weight.

The above object is also achieved by a method according to claim 12. Preferred embodiments are set out in the respective dependent claims.

The method is adapted for separating a fluid feed stream which comprises permeate material and retentate material into a permeate stream and a retentate stream. According to the method
a. a membrane module as described above is provided;
b. a fluid feed stream is guided through the fluid inlet into the at least one pressure vessel;
c. the fluid feed stream flows in the direction of the retentate outlet through the at least one membrane cartridge inside the pressure vessel, wherein, during the throughflow through the at least one membrane cartridge, the permeate material flows through the membranes into the membrane envelopes, thereby separating the fluid feed stream into a permeate stream in the membrane envelopes and a retentate stream between the membrane envelopes;
d. the permeate stream flows from the membrane envelopes through the one or more radial openings into the one or more permeate tubes, flows through the one or more permeate tubes to the one or more permeate outlets and is discharged there;
e. the retentate stream flows between the membrane envelopes and, having passed the at least one membrane cartridge, is discharged through the retentate outlet.

The method enables the use of a large area of membrane inside a compact low-cost housing and allows operating the membrane module at an elevated pressure of above 120 kPa. This provides a cost effective and economically viable way of operating the membrane envelopes in the membrane module.

In an embodiment of the present invention the membrane module comprises multiple membrane cartridges arranged in series inside the pressure vessel along the longitudinal axis and, wherein in step e. the retentate stream flows between the membrane envelopes to the subsequent membrane cartridge of the multiple membrane cartridges arranged in series and enters the subsequent membrane cartridges as a stripped fluid feed stream and, having passed the membrane cartridges arranged in series, the retentate stream is discharged through the retentate outlet. This enables the provision of multiple stage stripping cascade process. Moreover, using multiple membrane cartridges in series allows the individual withdrawal of multiple permeate streams, e.g. one permeate stream from each membrane cartridge, by means of internal pipe work. In this way two or more permeate streams comprising different carbon dioxide concentrations can be combined and a stream comprising a predefined carbon dioxide concentration can be mixed.

In another embodiment of the present invention the fluid feed stream and the permeate stream at least partially flow past each other in a countercurrent manner through the at least one membrane cartridge. The countercurrent flow pattern allows for an optimum use of the applied separation driving force.

In an embodiment of the present invention the pressure vessel further comprises a first end piece and a second end piece, each sealing the at least one membrane cartridge against the first end cap and the second end cap, respectively, wherein each pressure vessel comprises an annulus located radially inward between the cylindrical wall of the pressure vessel and a cuboid housing of the at least one membrane cartridge and, wherein the first end piece comprises an equalization port which is configured to provide a fluid connection between the fluid inlet at the first end cap and the annulus, wherein the fluid feed stream entering the at least one pressure vessel partially streams through the equalization port thereby equalizing the pressure at the fluid inlet and the annulus. As the pressure at the fluid inlet is equalized with the pressure in the annulus of the pressure vessel the force acting on the membrane cartridges is decreased. The maximum pressure differential between the annulus and the internal pressure within the at least one membrane cartridge equals the sum of the differential pressures across each of the membrane cartridges inside the pressure vessel through which the fluid feed stream is guided. If, for example, four membrane cartridges are arranged in series inside the pressure vessel, such that the fluid feed stream is guided through the four membrane cartridges one after the other, the maximum pressure differential is about 2 kPa to 20 kPa. Once the pressure between the annulus and the fluid inlet is equalized there is no flow through the annulus of the pressure vessel.

In another embodiment of the present invention the fluid feed stream has an absolute pressure range from 100 kPa to 2 MPa, preferably from 100 kPa to 1.5 MPa, more preferably from 150 kPa to 1.0 MPa. The higher the pressure the lower the gas volume of the permeate stream exiting the membrane module. Due to a higher operating pressure the size of the supporting equipment, e.g. the number of required vacuum pumps on the retentate side of the membrane module, can be reduced.

In an embodiment of the present invention the membrane cartridges are arranged in two cartridge rows with a gap in between, each cartridge row comprising multiple membrane cartridges arranged in series, wherein the two cartridge rows are arranged in parallel and, wherein the fluid feed stream simultaneous flows through both of the cartridge rows in opposite directions along the longitudinal axis from the gap through both of the cartridge rows towards the first end cap and the second end cap, respectively. It is in general desirable that the pressure drop over multiple membrane cartridges arranged in series is minimized. Arranging two cartridge rows in parallel which together comprise the same number of membrane cartridges than one single row of membrane cartridges arranged in series reduces the pressure drop. The pressure drop may thus be chosen individually depending on the used membranes, the fluid feed stream pressure and the available assembly space.

### DETAILED DESCRIPTION OF THE INVENTION

The present invention is described in detail in the following with reference to the figures, in which:
- Fig. 1: shows a perspective view of a membrane module according to the present invention housed in a 40' container;
- Fig. 2: shows a schematic view of a pressure vessel containing multiple membrane cartridges;
- Fig. 3: shows a cross sectional view through stacked membrane envelopes;
- Fig. 4: shows the flow directions of the fluid feed stream/retentate stream as well as of the permeate stream within a single membrane envelope;
- Fig. 5: shows a schematic view of a second embodiment of a pressure vessel containing multiple membrane cartridges; and
- Fig. 6: shows a schematic view of a system comprising a membrane module according to the present invention.

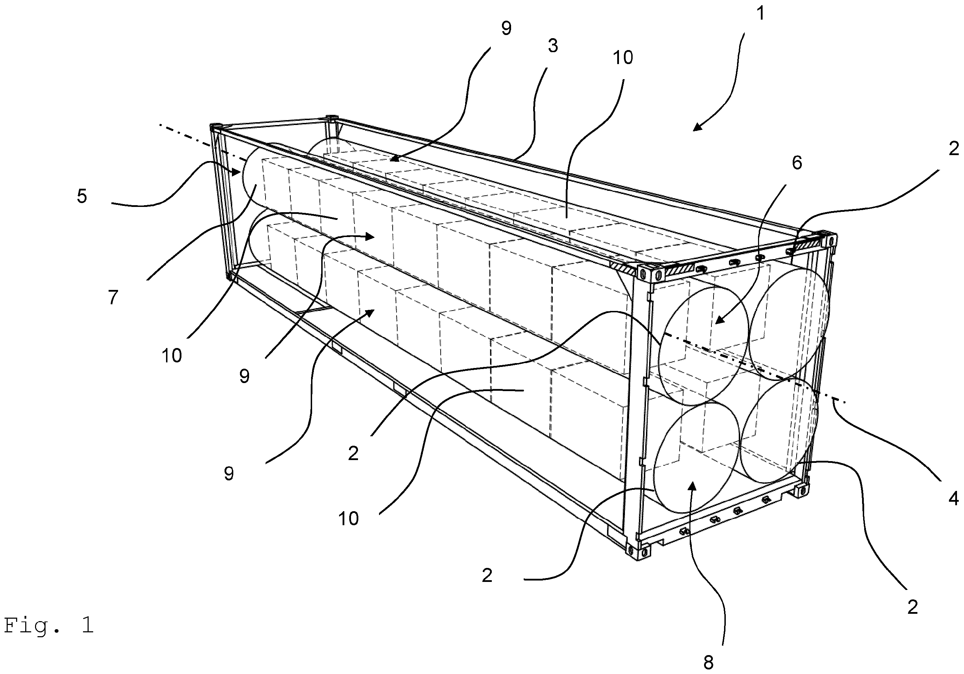

Figure 1 shows a membrane module 1 for separating a fluid feed stream which comprises permeate material and retentate material into a permeate stream and a retentate stream. In particular, the membrane module 1 is adapted for the large-scale capture of carbon dioxide from major industrial flue gas emissions e.g. in large cement, iron and steel and coal-fired and waste to energy power generation plants. The flue gas enters the membrane module 1 as a fluid feed stream and is separated into a carbon dioxide containing permeate stream and a retentate stream. The membrane module 1 is configured to be operated at an absolute pressure range of the fluid feed stream from 100 kPa to 2 MPa, preferably from 100 kPa to 1.5 MPa, more preferably from 150 kPa to 1.0 MPa.

The membrane module 1 comprises four pressure vessels 2 and a 40' container 3 in which the pressure vessels 2 are housed. Each pressure vessel 2 extends along a longitudinal axis 4 from a first end 5 towards a second end 6 and has a cylindrical wall 7 enclosing an internal space 8.

The membrane module 1 further comprises 32 membrane cartridges 9 wherein eight membrane cartridges 9 are housed in each of the pressure vessels 2. The membrane cartridges 9 of each pressure vessel 2 are arranged in series inside the pressure vessel 2 along the longitudinal axis 4. Each membrane cartridge 9 has a cuboid housing 10. To enhance the comprehensibility of Figure 1, the container walls as well as the cylindrical walls of the pressure vessels 2 have been made transparent.

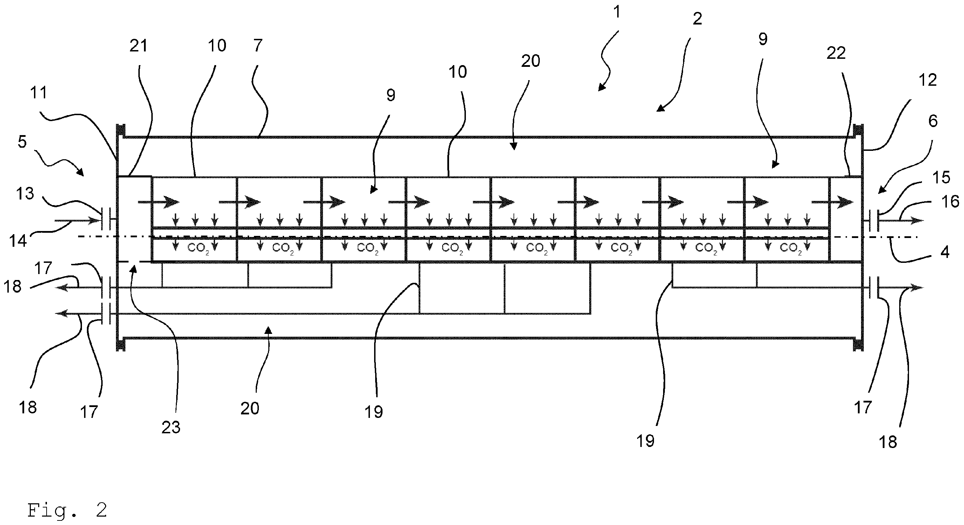

Figure 2 shows the membrane module 1, in particular one of the pressure vessels 2 of the membrane module 1, in detail.

The first end 5 of the pressure vessel 2 is closed by a first end cap 11 and the second end 6 of the pressure vessel 2 is closed by a second end cap 12. The first end cap 11 comprises a fluid inlet 13 for receiving the fluid feed stream 14. The second end cap 12 comprises a retentate outlet 15 for discharging the retentate stream 16. The first end cap 11 and the second end cap 12 comprise one or more permeate outlets 17 for discharging the permeate stream 18.

Eight membrane cartridges 9 are arranged in series inside the pressure vessel 2 along the longitudinal axis 4. The cuboid housings 10 of the membrane cartridges 9 are sealed to each other, such that the fluid feed stream 14 streams through the eight membrane cartridges 9 before exiting the membrane module 1 as retentate stream 16. Each membrane cartridge 9 comprises one or more permeate tubes 19 for guiding the permeate stream 18 out of each membrane cartridge 9. Each permeate tube 19 extends transversely to the flow direction of the fluid feed stream 14 and is in fluid connection with the at least one permeate outlet 17.

Each pressure vessel 2 comprises an annulus 20 located radially inward between the cylindrical wall 7 of the pressure vessel 2 and the cuboid housing 10 of the at least one membrane cartridge 9. The pressure vessel 2 further comprises a first end piece 21 and a second end piece 22, each sealing the at least one membrane cartridge 9 against the first end cap 11 and the second end cap 12, respectively. The first end piece 21 comprises an equalization port 23 formed as a through hole which is configured to provide a fluid connection between the fluid inlet 13 at the first end cap 11 and the annulus 20 such that the pressure at the fluid inlet 13 and the annulus 20 is equalized. Alternatively, the first end piece 21 may be omitted such that the fluid feed stream entering the fluid inlet 13 may directly stream in the annulus 20 to equalize pressure at the fluid inlet 13 and the annulus 20.

The pressure vessel comprises a detachment mechanism (not shown) which upon actuation allows detachment of the membrane cartridges 9 out of the pressure vessel 2. The detachment mechanism comprises rails arranged inside the pressure vessel 2 parallel to the longitudinal axis 4 thereof and the multiple membrane cartridge 9 comprises pulleys configured to roll on the rails such that the multiple membrane cartridges 9 are movable along the rails out of the pressure vessel 2.

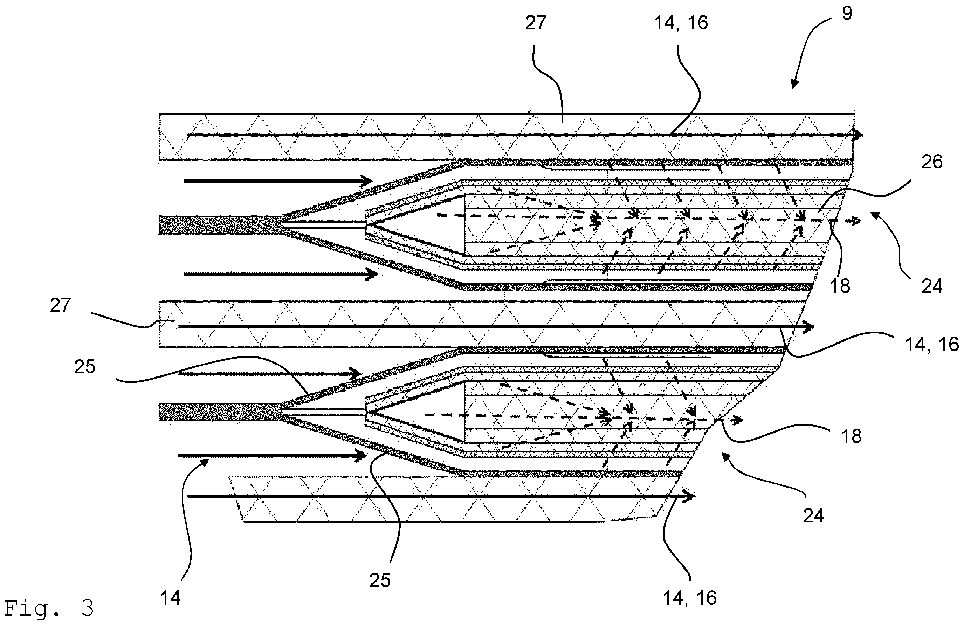

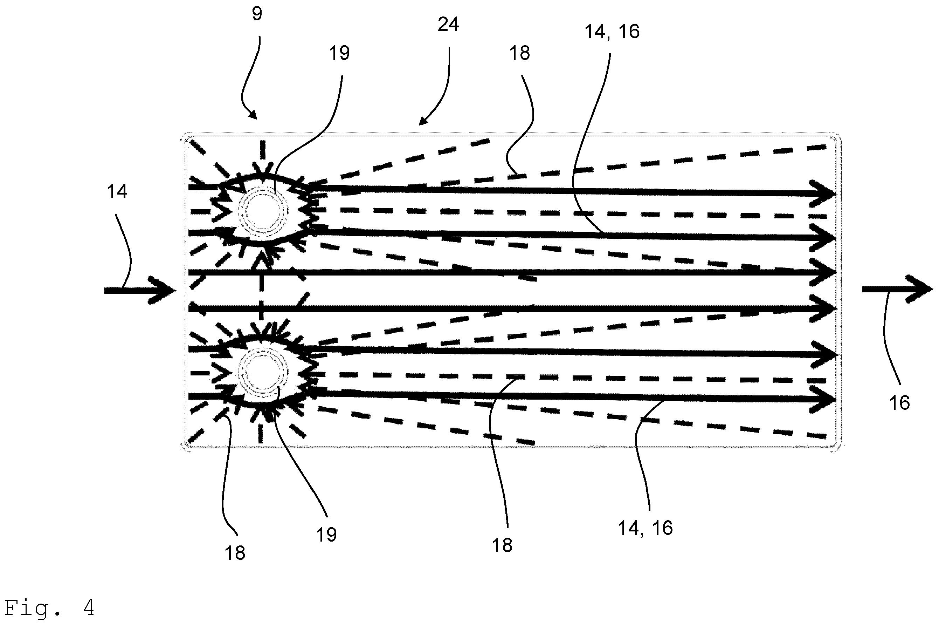

As shown in Figures 3 and 4 each of said membrane cartridges 9 comprises multiple membrane envelopes 24 arranged in the form of a stack. The membrane envelopes 24 each comprise two membranes 25 which are arranged on a carrier material and one or more first spacers 26 between the membranes 25, which keep the membranes 25 spaced apart from each other, in order to allow a free flow cross-section for a through-flow of the permeate stream 18 through the membrane envelopes 24. The membranes 25 comprise edges along which the membranes 25 of a membrane envelope 24 are connected to each other, in order to prevent the fluid feed stream 14 and the retentate stream 16 from penetrating into the membrane envelopes 24.

Each of said membrane cartridges 9 further comprises second spacers 27 between the membrane envelopes 24, which keep the membrane envelopes 24 spaced apart, in order to allow a free flow cross-section for a throughflow of the fluid feed stream 14 and/or the retentate stream 16 in a flow direction. The first and/or second spacers 26, 27 independently of each other, can comprise or entirely consist of a plastic fabric.

The one or more permeate tubes 19 comprise one or more radial openings, through which the permeate stream can flow out of the membrane envelopes 24 into the one or more permeate tubes 19. Seals may be fitted on the one or more permeate tubes 19 between the membrane envelopes 24 with the result that contact between the fluid feed stream 14 and/or the retentate stream 16 and the one or more permeate tubes 19 is prevented. Both the fluid feed stream 14 and the retentate stream 16, which are both present between the membrane envelopes 24, are thus prevented from penetrating into the one or more permeate tubes 19.

The membrane envelopes 19 and their function are described in detail in European patent application EP 3 227 004 A1 which is herewith incorporated by reference in its entirety.

In the following a method for separating a fluid feed stream which comprises permeate material and retentate material into a permeate stream and a retentate stream is described with reference to figures 1 to 4.

In a first step a membrane module as describe above is provided, wherein the membrane module 1 comprises four pressure vessels 2 as shown in Fig. 1 and eight membrane cartridges 9 per pressure vessel 2. The membrane cartridges 9 are arranged in series inside each pressure vessel 2 along the longitudinal axis 4.

A fluid feed stream 14 is guided through the fluid inlet 13 into the four pressure vessels 2. The fluid feed stream 14 which enters the pressure vessels 2 partially streams through the equalization port 23 in the first end piece 21 of each of the pressure vessels 2 thereby equalizing the pressure at the fluid inlet 13 and the annulus 20. The fluid feed stream 14 has an absolute pressure range from 100 kPa to 2 MPa, preferably from 100 kPa to 1.5 MPa, more preferably from 150 kPa to 1.0 MPa.

The fluid feed stream 14 flows in the direction of the retentate outlet 17 through the membrane cartridges 9 inside the pressure vessel 2. During the throughflow through the eight membrane cartridges 9 per pressure vessel 2, the permeate material flows through the membranes 25 into the membrane envelopes 24, thereby separating the fluid feed stream 14 into a permeate stream 18 in the membrane envelopes 24 and a retentate stream 16 between the membrane envelopes 24.

The permeate stream 18 flows from the membrane envelopes 24 through the one or more radial openings into the one or more permeate tubes 19, flows through the one or more permeate tubes 19 to the one or more permeate outlets 17 and is discharged there.

As can be seen in particular in Figure 4, the fluid feed stream 14 and the permeate stream 18 at least partially flow past each other in a countercurrent manner through each of the membrane cartridges 9.

The retentate stream 16 flows between the membrane envelopes 24 to the subsequent membrane cartridge 9 of the eight membrane cartridges 9 arranged in series and enters the subsequent membrane cartridges 9 as a stripped fluid feed stream 14 and, having passed the eight membrane cartridge 9 per pressure vessel 2, the retentate stream 16 is discharged through the retentate outlet 15.

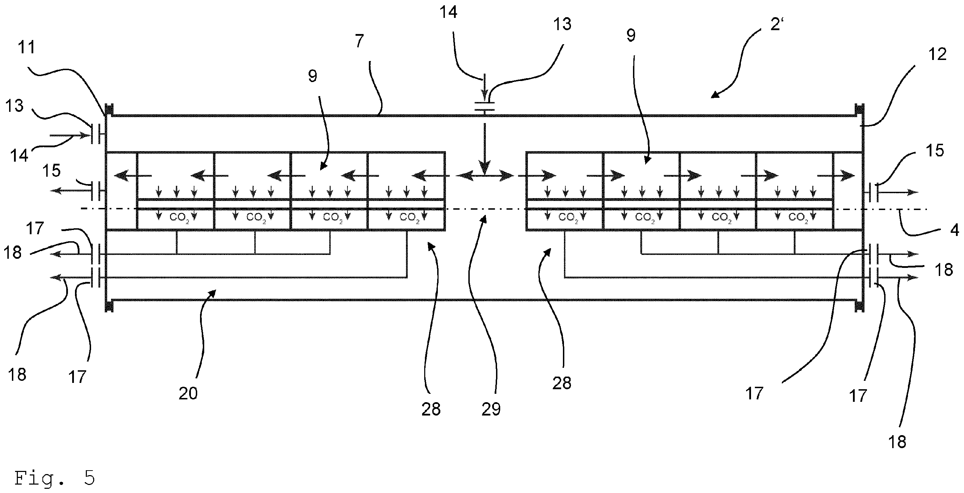

Fig. 5 shows a second embodiment of a pressure vessel 2 containing eight membrane cartridges. The pressure vessel 2' differs from the one shown in Figure 2 in that that the membrane cartridges 9 are arranged in two cartridge rows 28 each cartridge row 28 comprising four membrane cartridges 9 arranged in series. The two cartridge rows 28 are arranged along the longitudinal axis 4 of the pressure vessel 2' with a gap 29 in between the two cartridge rows 28. The fluid inlet 13 is arranged at the circumference of the cylindrical sidewall 7 of the pressure vessel 2' and is fluidically connected with the gap 29 between the two cartridge rows 28. Alternatively, the fluid inlet 13 may be positioned at the first end cap 11 of the pressure vessel 2'.

The two cartridge rows 28 are arranged in parallel such that the fluid feed stream 14 simultaneously flows through both of the cartridge rows 28. The fluid feed stream 14 is divided at the gap 29 and flows in opposite directions along the longitudinal axis 4 through both of the cartridge rows 28 towards the first end cap 11 and the second end cap 12, respectively. The first end cap 11 and the second end cap 12 comprise each a retentate outlet 15 for discharging the retentate stream.

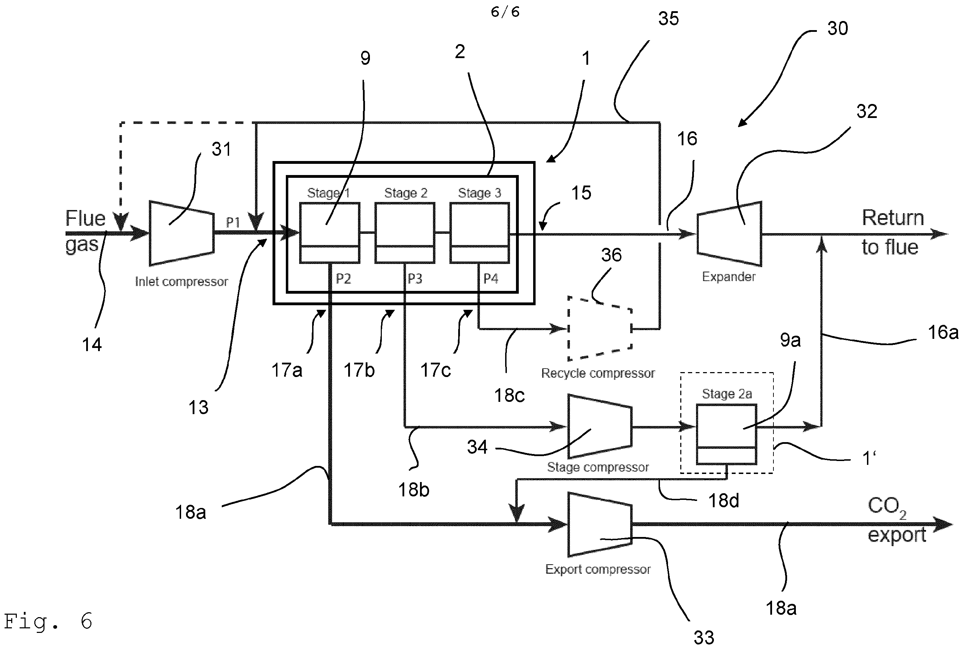

Figure 6 shows a system 30 comprising a membrane module 1 according to the present invention. In the interest of simplification the membrane module 1 only comprises one pressure vessel 2 and three membrane cartridges 9 arranged in series in the pressure vessel 2. However, the membrane module 1 as shown in Fig. 6 may comprise more than 3 membrane cartridges, e.g. 32 membrane cartridges 9 arranged in four pressure vessels 2 as shown in Fig. 1.

An inlet flue gas compressor 31 is arranged in the fluid direction of the fluid inlet stream 14 prior to the fluid inlet 13 such that the flue gas, e.g. from a flue stack, is compressed to an operating pressure prior to entering the membrane module 1. An expander 32 is positioned in fluid direction of the retentate stream 16 after the retentate outlet 15 such that the retentate stream 16 is expanded, preferably to an atmospheric pressure, after being dispensed from the membrane module 1. The expanded retentate stream 16 may be returned to the flue stack.

The membrane module 1 comprises a first permeate outlet 17a, a second permeate outlet 17b, and a third permeate outlet 17c which are each connected to one of the membrane cartridges 9. The first permeate outlet 17a is connected to an export compressor 33 adapted to compress a carbon dioxide containing permeate stream 18a being dispensed from the first permeate outlet 17a to an export pressure. The compressed retentate stream 18a may be exported to a storage tank or directly used in further process steps.

The second permeate outlet 17b is connected to a stage compressor 34 and to a further membrane cartridge 9a thereafter. The further membrane cartridge 9a may be part of a second membrane module 1'. The stage compressor 34 is configured to compress a permeate stream 18b being dispensed form the second permeate outlet 17b such that the compressed permeate stream 18b enters the further membrane cartridge 9a. A retentate stream 16a dispensed from the further membrane cartridge 9a is pressure let-down and joins with the expanded retentate stream 16 from the membrane module 1 which may be returned to the flue stack.

A permeate stream 18d dispensed from the further membrane cartridge 9a is joined with the permeate stream 18a dispensed from the first permeate outlet 17a which is compressed and exported thereafter. The permeate stream 18d contains a different carbon dioxide concentration compared to the permeate stream 18a dispensed from the first permeate outlet 17a. Depending on the mixing ratio of the permeate streams 18a and 18d a permeate stream with a predefined carbon dioxide concentration can be generated.

The system 30 comprises a recycle line 35 which is adapted to guide a permeate stream 18c dispensed from the third permeate outlet 17c of the membrane module 1 either directly prior to the fluid inlet 13 of the membrane module 1 or prior to the inlet compressor 31. The recycle line may optionally comprise a recycle compressor 36 adapted to compress the permeate stream 18c to the operating pressure.

## Claims

1. Membrane module for separating a fluid feed stream (14) which comprises permeate material and retentate material into a permeate stream (18, 18a, 18b, 18c, 18d) and a retentate stream (16, 16a), comprising:
at least one pressure vessel (2) extending along a longitudinal axis (4) from a first end (5) towards a second end (6) and having a cylindrical wall (7) enclosing an internal space (8),
wherein the first end (5) of the pressure vessel (2) is closed by a first end cap (11) and the second end (6) of the pressure vessel (2) is closed by a second end cap (12),
wherein at least one of the first end cap (11) and the cylindrical sidewall (7) comprises a fluid inlet (13) for receiving the fluid feed stream (14),
wherein the second end cap (12) comprises a retentate outlet (15) for discharging the retentate stream (16, 16a) and,
wherein at least one of the first end cap (11) and the second end cap (12) comprises one or more permeate outlets (17, 17a, 17b, 17c) for discharging the permeate stream (18, 18a, 18b, 18c, 18d),
**characterized in that**
the membrane module (1, 1') further comprises at least one membrane cartridge (9, 9a) arranged inside the pressure vessel (2) each membrane cartridge (9, 9a) comprising
multiple membrane envelopes (24) arranged in the form of a stack,
wherein the membrane envelopes (24) each comprise two membranes (25) each arranged on a carrier material and one or more first spacers (26) between the membranes (25), which keep the membranes (25) spaced apart from each other, in order to allow a free flow cross-section for a through-flow of the permeate stream (18, 18a, 18b, 18c, 18d) through the membrane envelopes (24),
wherein the membranes (25) comprise edges along which the membranes (25) of a membrane envelope (24) are connected to each other, in order to prevent the fluid feed stream (14) and the retentate stream (16, 16a) from penetrating into the membrane envelopes (24),
second spacers (27) between the membrane envelopes (24), which keep the membrane envelopes (24) spaced apart, in order to allow a free flow cross-section for a throughflow of the fluid feed stream (14) and/or the retentate stream (16, 16a) in a flow direction, and
one or more permeate tubes (19), which extend, transversely to the flow direction of the fluid feed stream (14) and are in fluid connection with the at least one permeate outlet (17, 17a, 17b, 17c), wherein the one or more permeate tubes (19) comprise one or more radial openings, through which the permeate material from the membrane envelopes (24) arrives in the one or more permeate tubes (19).

2. Membrane module according to claim 1, **characterized in, that** the membrane module (1, 1') is configured to be operated at a pressure range of the fluid feed stream (14) from 100 kPa to 2 MPa, preferably from 100 kPa to 1.5 MPa, more preferably from 150 kPa to 1.0 MPa.

3. Membrane module according to any of the preceding claims, **characterized in, that** the at least one membrane cartridge (9, 9a) has a cuboid housing (10).

4. Membrane module according to claim 3, **characterized in, that** each pressure vessel (2) comprises an annulus (20) located radially inward between the cylindrical wall (7) of the pressure vessel (2) and the cuboid housing (10) of the at least one membrane cartridge (9, 9a), wherein the pressure vessel (2) further comprises a first end piece (21) and a second end piece (22), each sealing the at least one membrane cartridge (9, 9a) against the first end cap (11) and the second end cap (12), respectively, and, wherein the first end piece (21) comprises an equalization port (23) which is configured to provide a fluid connection between the fluid inlet (13) at the first end cap (11) and the annulus (20) such that the pressure at the fluid inlet (13) and the annulus (20) is equalized.

5. Membrane module according to claim 3, **characterized in, that** the membrane module (1, 1') comprises multiple membrane cartridges (9, 9a) which are arranged in series inside the pressure vessel (2) along the longitudinal axis (4) and,
wherein the cuboid housings (10) of the membrane cartridges (9, 9a) are sealed to each other, such that the fluid feed stream (14) streams through the multiple membrane cartridges (9, 9a) before exiting the membrane module (1, 1') as retentate stream (16).

6. Membrane module according to any of the preceding claims, **characterized in, that** up to 12 membrane cartridges (9, 9a), preferably up to 10 membrane cartridges (9, 9a), more preferably up to 8 membrane cartridges (9, 9a), most preferably 4 membranes cartridges (9, 9a) are arranged in series inside the pressure vessel (2).

7. Membrane module according to any of the preceding claims, **characterized in, that** the pressure vessel (2) comprises a detachment mechanism which upon actuation allows detachment of the at least one membrane cartridge (9, 9a) out of the pressure vessel (2).

8. Membrane module according to claim 5, **characterized in, that** the detachment mechanism comprises rails arranged inside the pressure vessel (2) parallel to the longitudinal axis (4) thereof and the at least one membrane cartridge (9, 9a) comprises pulleys configured to roll on the rails such that the at least one membrane cartridge (9, 9a) is movable along the rails out of the pressure vessel (2).

9. Membrane module according to claim 5, **characterized in, that** the membrane cartridges (9, 9a) are arranged in two cartridge rows (28) each cartridge row (28) comprising multiple membrane cartridges (9, 9a) arranged in series, wherein the two cartridge rows (28) are arranged in parallel such that the fluid feed stream (14) simultaneously flows through both of the cartridge rows (28) .

10. Membrane module according to claim 9, **characterized in, that** the two cartridge rows (28) are arranged along the longitudinal axis (4) with a gap (29) in between the two cartridge rows (28), wherein the fluid inlet (13) at the first end cap (11) or the cylindrical sidewall (4) of the pressure vessel (2) is fluidically connected with the gap (29) between the two cartridge rows (28) and, wherein the two cartridge rows (28) are further arranged such that the fluid feed stream (14) is divided at the gap (29) and flows in opposite directions along the longitudinal axis (4) through both of the cartridge rows (28) towards the first end cap (11) and the second end cap (12), respectively.

11. Membrane module according to any of the preceding claims, **characterized in, that** membrane module (1, 1') comprises multiple pressure vessels (2), preferably up to 10 pressure vessels (2), more preferably up to 6 pressure vessels (2), most preferably 4 pressure vessels (2) and further comprises a 20', 40', 45' HC, 45' PW or 53' HC container (3) in which the pressure vessels (2) are housed.

12. Method for separating a fluid feed stream (14) which comprises permeate material and retentate material into a permeate stream (18, 18a, 18b, 18c, 18d) and a retentate stream (16, 16a), in which
f. a membrane module (1, 1') according to any of claims 1 to 11 is provided;
g. a fluid feed stream (14) is guided through the fluid inlet (13) into the at least one pressure vessel (2) ;
h. the fluid feed stream (14) flows in the direction of the retentate outlet (15) through the at least one membrane cartridge (9, 9a) inside the pressure vessel (2), wherein, during the throughflow through the at least one membrane cartridge (9, 9a), the permeate material flows through the membranes (25) into the membrane envelopes (24), thereby separating the fluid feed stream (14) into a permeate stream (18, 18a, 18b, 18c, 18d) in the membrane envelopes (24) and a retentate stream (16, 16a) between the membrane envelopes (24);
i. the permeate stream (18, 18a, 18b, 18c, 18d) flows from the membrane envelopes (25) through the one or more radial openings into the one or more permeate tubes (19), flows through the one or more permeate tubes (19) to the one or more permeate outlets (17, 17a, 17b, 17c) and is discharged there;
j. the retentate stream (16, 16a) flows between the membrane envelopes (24) and, having passed the at least one membrane cartridge (9, 9a), is discharged through the retentate outlet (15).

13. Method according to claim 12, wherein the membrane module (1, 1') comprises multiple membrane cartridges (9, 9a) arranged in series inside the pressure vessel (2) along the longitudinal axis (4) and, wherein in step e. the retentate stream (16, 16a) flows between the membrane envelopes (24) to the subsequent membrane cartridge (9, 9a) of the multiple membrane cartridges (9, 9a) arranged in series and enters the subsequent membrane cartridges (9, 9a) as a stripped fluid feed stream (14) and, having passed the membrane cartridges (9, 9a) arranged in series, the retentate stream (16, 16a) is discharged through the retentate outlet (15).

14. Method according to any of claims 12 or 13, in which the fluid feed stream (14) and the permeate stream (18, 18a, 18b, 18c, 18d) at least partially flow past each other in a countercurrent manner through the at least one membrane cartridge (9, 9a).

15. Method according to any of claims 12 to 14, wherein the pressure vessel (2) further comprises a first end piece (21) and a second end piece (22), each sealing the at least one membrane cartridge (9, 9a) against the first end cap (11) and the second end cap (12), respectively, wherein each pressure vessel (2) comprises an annulus (20) located radially inward between the cylindrical wall (7) of the pressure vessel (2) and a cuboid housing (10) of the at least one membrane cartridge (9, 9a) and, wherein the first end piece (21) comprises an equalization port (23) which is configured to provide a fluid connection between the fluid inlet (13) at the first end cap (11) and the annulus (20), wherein the fluid feed stream (14) entering the at least one pressure vessel (2) partially streams through the equalization port (23) thereby equalizing the pressure at the fluid inlet (13) and the annulus (20).

16. Method according to any of claims 12 to 15, in which the fluid feed stream (14) has a pressure range from 100 kPa to 2 MPa, preferably from 100 kPa to 1.5 MPa, more preferably from 150 kPa to 1.0 MPa.

17. Method according to any of claims 12 to 16, in which the membrane cartridges (9, 9a) are arranged in two cartridge rows (28) with a gap (29) in between, each cartridge row (28) comprising multiple membrane cartridges (9, 9a) arranged in series, wherein the two cartridge rows (28) are arranged in parallel and, wherein the fluid feed stream (14) simultaneous flows through both of the cartridge rows (28) in opposite directions along the longitudinal axis (4) from the gap (29) through both of the cartridge rows (28) towards the first end cap (11) and the second end cap (12), respectively.
